# NEW EUROPEAN PATENT SPECIFICATION

(11) **EP 1 280 651 B2**
(45) Date of publication and mention of the opposition decision: **24.02.2010**
(45) Mention of the grant of the patent: 12.04.2006
(21) Application number: 01932394.8
(22) Date of filing: 08.05.2001
(51) Int. Cl.: B29C 49/00, B65D 81/05, B31D 5/00

(54) **DEVICE FOR MANUFACTURING CUSHIONS FILLED WITH A MEDIUM**
VORRICHTUNG ZUR HERSTELLUNG VON LUFTKISSEN
DISPOSITIF DE FABRICATION DE COUSSINS REMPLIS DE MATIERE

(30) Priority: 08.05.2000 NL 1015127
(43) Date of publication of application: 05.02.2003
(73) Proprietor: Free-Flow Packaging International, Inc., Redwood City, California 94063-3120 (US)
(72) Inventor: AQUARIUS, Pieter, Theodorus, Joseph, NL-6039 AP Stramproy (NL); STRAVER, Frederik, Cornelis, Martinus, NL-1251 EV Laren (NL)
(74) Representative: Bosch, Matthias
(86) International application number: PCT/NL2001/000351
(87) International publication number: WO 2001/085434

(56) References cited:
- EP-A- 0 679 588
- EP-A- 1 022 234
- WO-A-94/07678
- WO-A-01//53153
- WO-A-02//14156
- DE-U- 8 716 083
- GB-A- 809 413
- US-A- 3 660 189
- US-A- 3 868 285
- US-A- 4 017 351
- US-A- 4 021 283
- US-A- 6 015 047

## Description

Device for manufacturing cushions filled with a medium.

The present invention relates to a device according to the precharacterizing portion of claim 1. The medium may be a gaseous medium, but also another medium such as for instance a liquid or a powder.

International patent application WO94/07678 describes such a device for manufacturing small air-filled cushions or bags, for use as protective filling material when packaging fragile parts and other objects in cargo boxes or the like. The cushions are made by forming a transverse seal across the tubular foil, introducing air into the foil by inserting a needle through the wall of the tubular foil, and subsequently forming another transverse seal across the tubular foil where the air was introduced to close off the cushion and to seal off the hole made by the needle. Consecutive cushions leave the device as either a number of cushions connected to each other, or they can be separated in order to be used separately. Said known device and other alternative known devices amongst others need separate means for centering the tubular foil in the device in order to correctly carry out the treatments on it, and a relatively large number of parts, such as for instance sealing means. Such separate centering devices and parts not only render the device more expensive, but also more sizeable.

It is amongst others an object of the present invention to provide a device for manufacturing a cushion filled with a medium, with which the tubular foil can be positioned in the device and filled with the medium in a simple manner, which device has a very compact construction, and comprises few parts.

To that end the present invention provides a device according to claim 1. As a result the introduction means for the medium is also used as means for positioning the pre-processed tubular foil in the device. Moreover, merely one introduction means and one sealing means are necessary for sealing the cut in longitudinal direction, as a result of which the device can be designed compact and economical.

In a preferred embodiment of a device according to the invention the pre-processed tubular foil is provided with spaced apart transverse seals, each transverse seal extending from the second longitudinal edge up to a distance from the first longitudinal edge. Thus the device does not need to comprise transverse sealing means for making a transverse seal, and can be designed very compact and economical.

Preferably the introduction means are formed by a tube having at least one opening, for instance a slit or holes, for introducing the medium into the pre-processed tubular foil, which opening preferably faces away from the first longitudinal edge. As a result the air is blown in from the first longitudinal edge towards the second longitudinal edge.

Preferably the tube is positioned for extending in upstream direction, past the first longitudinal edge within the tubular foil. When discharging the air or gas the first longitudinal edge is pulled against the tube.

The device according to the invention comprises means for pulling the first longitudinal edge taut, so that folds or creases in the tubular foil at the location of the sealing means are prevented and as a result leaks in the bags are prevented.

Pulling taut takes place in a very simple manner when the means for pulling the first longitudinal edge taut are adapted for setting the tubular foil at an obtuse angle in the area immediately upstream of the sealing means. The first longitudinal edge is situated at the outside of the angle, and has to traverse a longer track than the second longitudinal edge. The second longitudinal edge will form creases, which promotes the filling process.

The means for pulling the first longitudinal edge taut also comprise a supply roll or holder shaft for it that is positioned oblique with respect to the transport direction of the tubular foil and at the location of the sealing means, so that the tube of foil is supplied in an already oblique position.

In an advantageous manner the tube can be a part of the means for pulling the first longitudinal edge taut and said tube comprises two portions that are at an obtuse angle to each other. The tube thus forms a guidance for the first longitudinal edge in the "outer curve", in which the tubular foil remains positioned against the tube during setting because of the air that comes out of the tube opening(s).

The obtuse angle preferably is approximately 175 degrees, and can be realised by curving the tube and may then be gradual, though in view of ease of manufacturing a buckle shape may be used.

The introduction of air into the tubular foil is improved when the tube, in a downstream portion of the obtuse angle, is provided with the discharge opening(s), so that the introduction of air is improved.

The cutting means can be positioned at the location of the upstream end of the sealing means.

Alternatively the cutting means can be positioned at a distance downstream of the upstream end of the sealing means.

In a further preferred embodiment of a device according to the invention the pre-processed tubular foil is provided with repetitive series of a number of consecutive and spaced apart transverse seals, in which each transverse seal extends from the second longitudinal edge up to a distance from the first longitudinal edge, in which at a distance from a last transverse seal of the series a triplet is situated of consecutively and spaced apart from each other a transverse seal, a row of perforations, which row extends from the first to the second longitudinal edge, and a transverse seal, the distance between a transverse seal and the row of perforations of the triplet being smaller than the distance between the neighbouring transverse seals of the number of transverse seals. Thus the device does need not to comprise transverse sealing means for making a transverse seal and perforation means for making a row of perforations, along which the cushions can be separated, and can be designed very compact and economical.

Using a pre-processed tubular foil makes it possible that a device according to the present invention does not need to comprise transverse sealing means and no means for making a row of perforations, and thus can be designed economical and with few parts.

Further embodiments and advantages of a device for manufacturing cushions filled with a medium according to the invention will clearly appear from the description given below of some exemplary embodiments of the invention, which should be considered as illustrations only and not as limiting. In the drawings:
Figure 1 schematically shows a view of a device not according to claim 1;
Figure 2 schematically shows a view transverse to the view of figure 1 of a device not according to claim 1;
Figure 3 schematically shows a cross-section of the cushion obtainable by the device shown in figs.1, 2;
Figure 4 shows a perspective view of a series of cushions obtainable by the device shown in figs. 1, 2;
Figure 5 schematically shows an example of a pre-processed tubular foil to be supplied to a device shown in figs. 1,2;
Figure 6 schematically shows an example of an alternative pre-processed tubular foil to be supplied to a device shown in figs 1, 2;
Figure 7 schematically shows an example of a further alternative pre-processed tubular foil to be supplied to a device shown in figs 1,2;
Figures 8A and 8B, respectively, show a view on a preferred embodiment of a device according to the invention and schematically show the build-up of a part thereof;
Figure 9A and 9B show schematic top views on the device of the figures 8A and 8B, in which some parts at the location of the sealing station have been left out for the sake of clarity.
Figure 10 shows a view according to arrow X in figure 9A; and
Figure 11 shows a view according to arrow XI in figure 9B.

The present invention will be described below on the basis of air as medium. However, it will be clear that also cushions or bags can be filled with another gaseous medium such as nitrogen, oxygen, helium or the like, or with a non-gaseous medium such as a liquid or a powder.

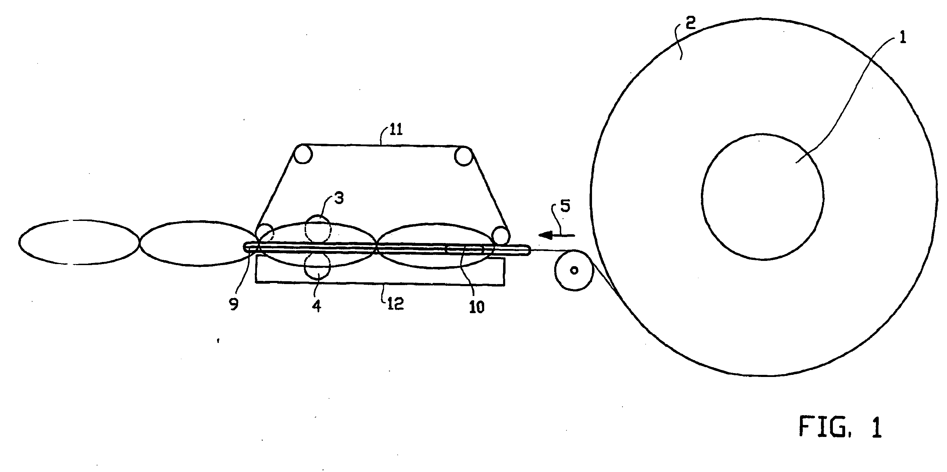

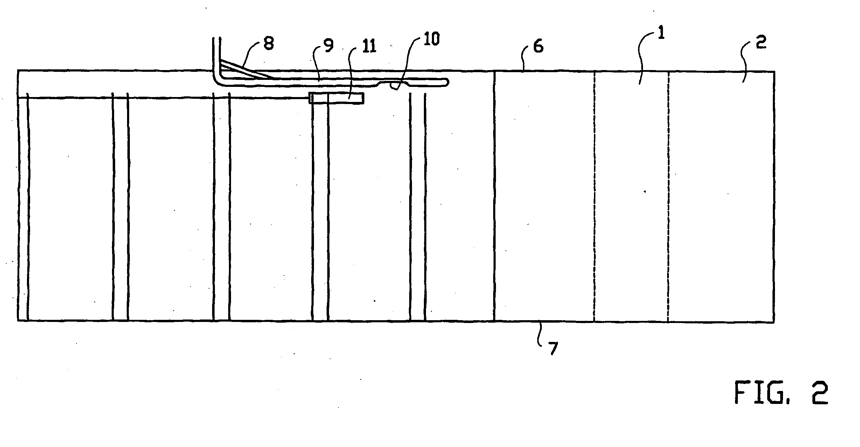

In figures 1 and 2 an exemplary embodiment of a device for manufacturing air-filled cushions is schematically shown in side view and top view, respectively, or vice-versa. The device preferably is provided with a carrier 1 for carrying a roll of pre-processed tubular foil 2.

The device is provided with two drive rollers 3, 4 between which the pre-processed tubular foil 2 can be passed. The two drive rollers 3, 4 preferably are springmounted with respect to each other, and press against each other to such an extent that they hold the pre-processed tubular foil 2. By rotation of the drive rollers 3, 4 the pre-processed tubular foil 2 is pulled from the carrier 1, so that the pre-processed tubular foil 2 is transported in a supply direction 5 through the device. To that end the drive rollers 3, 4 are provided at their surfaces with a material of a sufficiently high friction coefficient in a known manner. It will be clear that the invention is not limited to this way of passing the pre-processed tubular foil through the device, but that other passage devices can also be used.

The flexible pre-processed tubular foil 2 is supplied to the device in flat condition. The pre-processed tubular foil 2 thus has a first longitudinal edge 6 and a second longitudinal edge 7 opposite each other.

The device is further provided with a cutting means 8 for making a cut in the pre-processed tubular foil 2 (figure 2) only and at least near the first longitudinal edge 6 of the pre-processed tubular foil 2.

The device is also provided with an introduction means 9 for introducing air, or another medium, into the pre-processed tubular foil 2. The introduction means 9 is elongated. Preferably the introduction means 9 is formed by a tube having a slit 10 for introducing the medium into the pre-processed tubular foil 2. In a manner known per se, the tube 9 is connected to a supply of medium, for instance a ventilating fan or the like. Alternatively a number of medium introduction openings placed adjacent to each other can be provided. Instead of a slit, holes or other kinds of openings can be used as well.

The tube 9 can be inserted in the pre-processed foil 2; or through the cut made by the cutting means 8. In this way does the tube 9 not only ensure the introduction of a medium in the pre-processed tubular foil 2, but also the positioning of the pre-processed tubular foil 2 in the device.

Although at first sight it seems illogical to take a pre-processed tubular foil as starting point which is cut in longitudinal direction, in order to form two ends at one longitudinal edge, and not to use a centrefold foil which already has such a shape and is cheaper than pre-processed tubular foil, a cheaper final product is nonetheless obtained because the introduction means 9 is also used as positioning means for the pre-processed tubular foil 2 in the device. Furthermore only one sealing means is necessary for sealing the cut made, in longitudinal direction. As a result the device becomes cheaper, and thus the final product.

Sealing means 11, 12 (figure 1) are present for sealing the pre-processed tubular foil 2 in longitudinal direction and between the tube 9 and the second longitudinal edge 7. For instance the sealing means are formed by a circumferential heated teflon band 11, and a pressing means 12 situated opposite it. Of course other sealing means for making the longitudinal seal can also be used. Making a seal in a synthetic foil generally takes place by means of sealing with the help of heat.

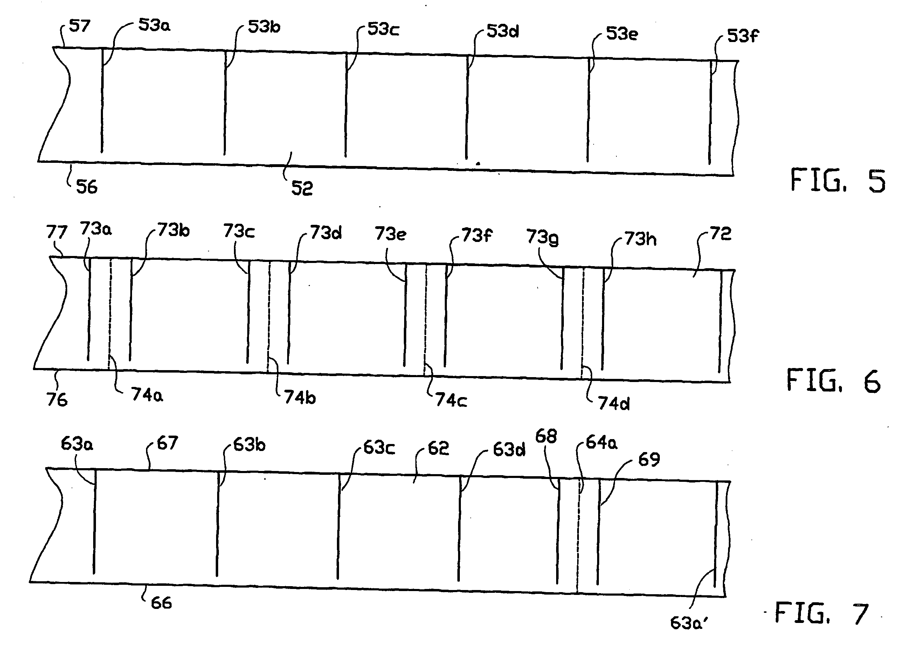

Preferably pre-processed tubular foil 52 is used in which spaced apart transverse seals 53a, 53b, .... have already been made. The transverse seals extend from the second longitudinal edge 57 up to a distance from the first longitudinal edge 56, as shown in figure 5. By using such a pre-processed foil 52 the device itself does not need to comprise means for making transverse seals, so that the device can be designed compact and economical. As will be clear the transverse seals bound the cushion filled with a medium.

An advantageous alternative pre-processed tubular foil 62 comprises repetitive series of a number and spaced apart transverse seals 63a, 63b, 63c and 63d ... The transverse seals here extend from the second longitudinal edge 67 up to a distance from the first longitudinal edge 66. The series is completed by a triplet of a transverse seal 68, a transverse row of perforations 64a, and a transverse seal 69, made after the last transverse seal 63d of the number of transverse seals. The transverse seals 68, 69 also extend here from the second longitudinal edge 67 up to a distance from the first longitudinal edge 66. The row of transverse perforation 64a extend up to both longitudinal edges. In this way it is possible in a simple manner to manufacture a number of air cushions, in the example given five, but any other number can also be used, which air cushions can easily be separated from a neighbouring series of five cushions, or another number, by the row of perforations. Moreover no means for making the transverse seals or transverse rows of perforations are necessary.

Alternatively a pre-processed tubular foil 72 can be used in which spaced apart pairs of transverse seals 73a, 73b; 73c, 73d... have been made. The transverse seals extend here from the second longitudinal edge 77 up to a distance from the first longitudinal edge 76. A transverse row 74a, 74b, .... of perforations has been made between the transverse seals 73a, 73b, .... of each pair, as shown in figure 7. By using such a pre-processed tubular foil 72 the device itself does not need to comprise means for making transverse seals, and no means for making transverse rows of perforations, so that the device can be designed compact and economical. As will be clear the transverse seals bound the cushion filled with a medium, and the transverse rows of perforations can be used for separating adjacent cushions from each other.

Alternatively the device according to the invention can further be provided with means for making a transverse seal in the pre-processed foil, and/or be provided with perforation means for making a transverse row of perforations, when another kind of pre-processed foil is taken as starting point.

The device according to the invention works as follow. First the beginning of the pre-processed foil is manually fed into the device. A first cut is made manually, or a cut is made by the cutting means, which cut is used for inserting the tube into the pre-processed tubular foil. Subsequently the device can operate in a mechanized manner, the medium each time being introduced via the tube, after which the longitudinal seal is made by the sealing means in order to enclose the introduced medium. Here the tube also ensures a positioning and a guidance of the pre-processed tubular foil.

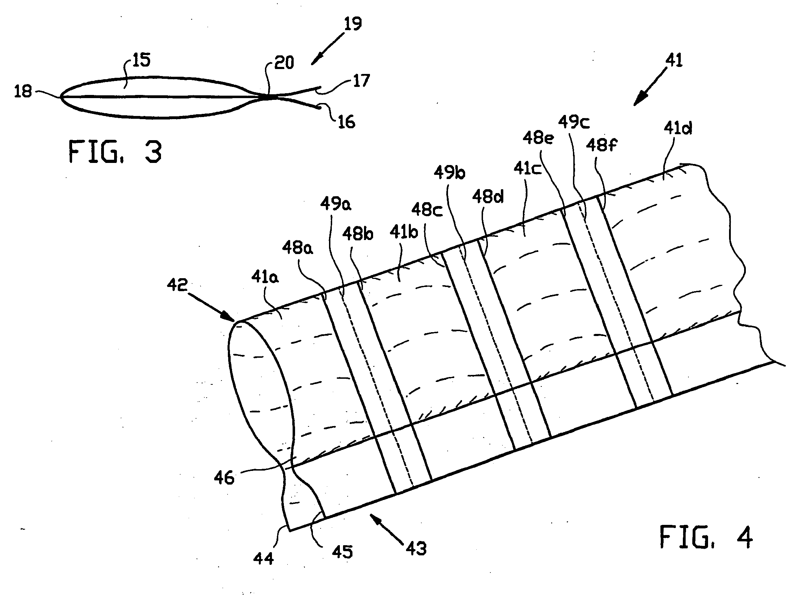

In figure 3 a cross-section of a cushion is schematically shown. The cushion 15 filled with a medium has a second closed off longitudinal edge 18, and a first cut-through longitudinal edge 19 formed by two ends 16, 17 situated opposite it, and a longitudinal seal 20 situated between the first 19 and the second 18 longitudinal edge. The medium is situated here between the second longitudinal edge 18 and the longitudinal seal 20.

In figure 4 a series 40 of cushions 41 a, 41 b ... manufactured by a device is shown in perspective view. Seen in cross-section each cushion 41a, 41b, .... has a second closed off longitudinal edge 42, and a first cut-through longitudinal edge 43 formed by two ends 44, 45 situated opposite it, and a longitudinal seal 46 situated between the first 43 and the second 42 longitudinal edge. Possibly the portion between the longitudinal seal 46 and the first longitudinal edge could be provided with prints for advertising or other (product) information, respectively. Alternatively the sealing means can be adjusted such that the portion between the longitudinal seal and the first longitudinal edge is cut from the rest of the pre-processed foil during sealing.

Adjacent cushions 41 a, 41 b, ... of a series 40 of cushions can be separated one from the other by one or more transverse seals 48a, ..., and/or be separated one from the other by a row of transverse perforations 49a,.....

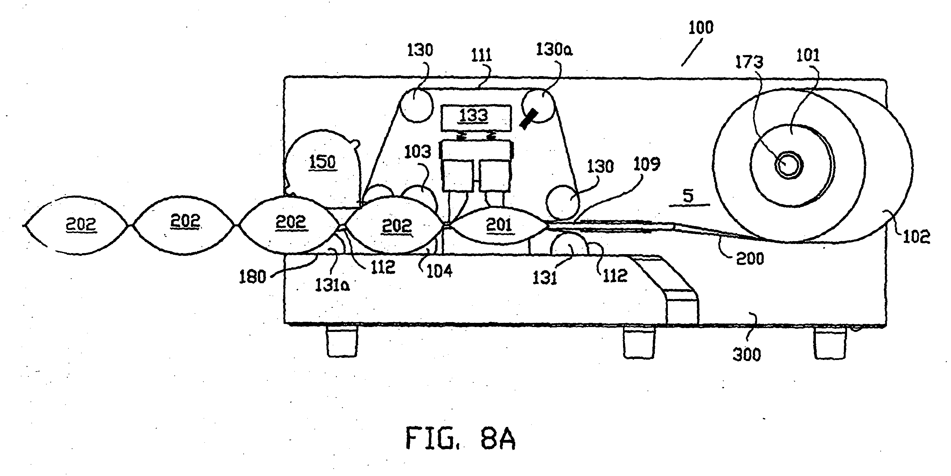

The embodiment 100 of a device for manufacturing air or gas-filled cushions according to the invention is shown in figures 8A and further. The device 100 comprises a frame 300 onto which a shaft 101/173 has been mounted for support of a roll 102 of tubular foil 200. The tubular foil corresponds to the one of figure 6, as can be seen in detail 9D, having transverse seals 162, 163 and in between them perforation 164. In operation the tubular foil 200 will be pulled from the roll 102 in the direction 5, in order to turn it into gas-filled bags 201, 202.

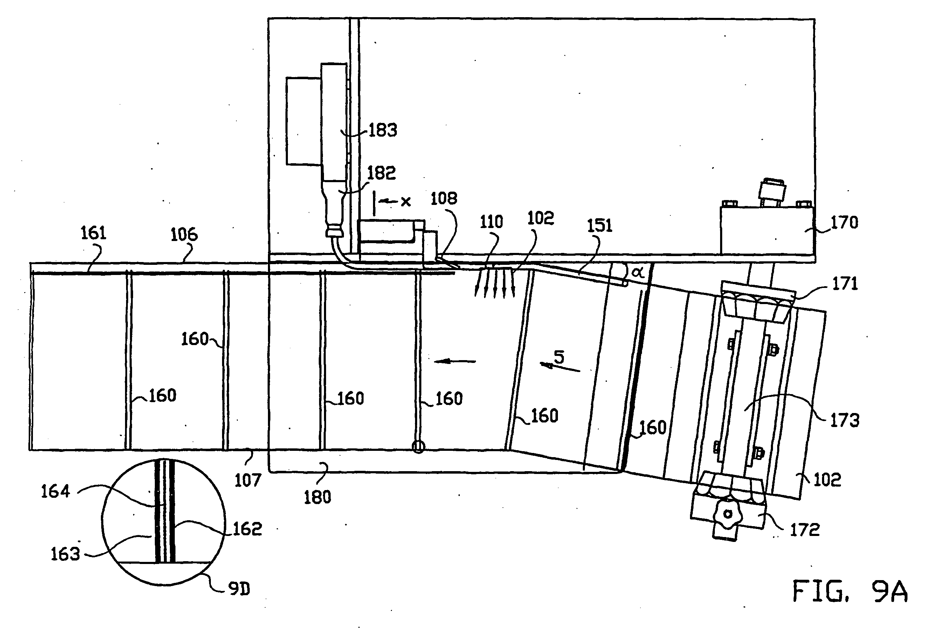

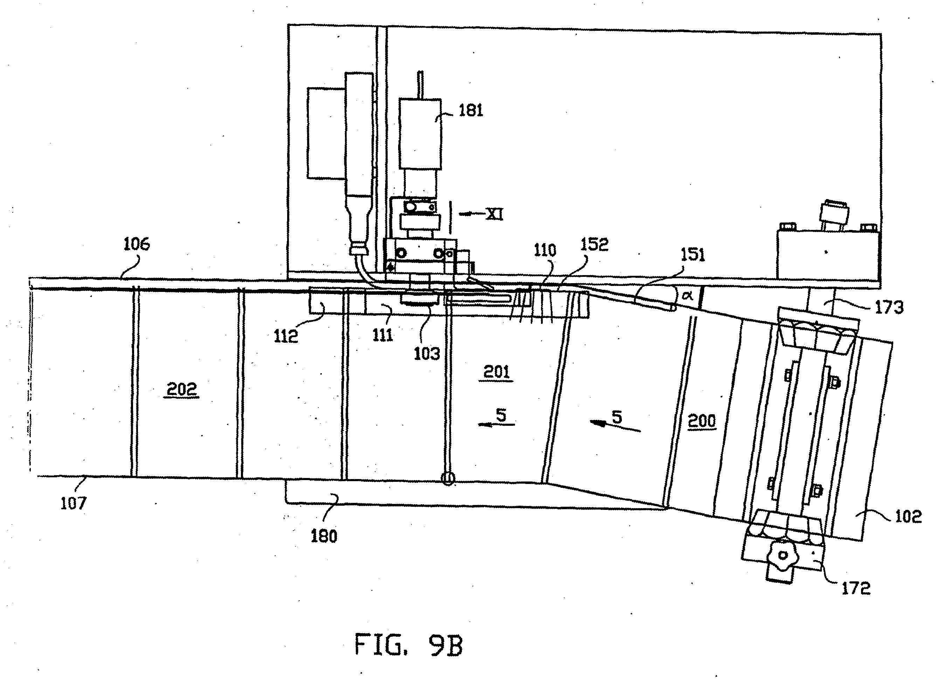

As can be seen in the figures 9A and 9B the shaft 101 comprises a rod 173, which at both ends is provided with cones 171, 172. The cone 172 can be removed in order to place a new roll 102. The rod 173 is bearing mounted in bearing block 170. The end of the bar shaft 173 extending outside the bearing block 170 is covered with a silicon strip, on which a stationary element that is not shown engages to slow the bar axis 173 down, so that the portion of the tubular foil 200 extending between the roller 102 and the sealing portion, cannot slacken.

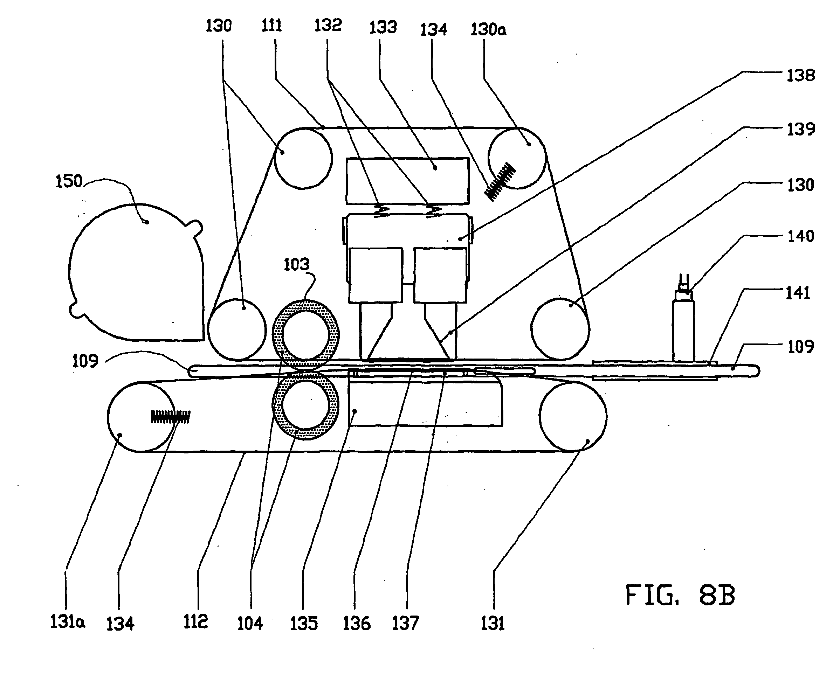

In figure 8B the location of a prox-sensor 140 and a counting wheel 141 is indicated.

For the filling with air a tube 109 extends along the first longitudinal edge 106 of the tubular foil 200, which tube is buckled, having a portion 152 extending parallel to the longitudinal seam 161 yet to be made, and a portion 1 51 situated ahead of it, which is at an angle α of 4 to 5° to it. As can be seen in the figures 9A and 9B the shaft 173 is perpendicular to the tube portion 151.

The tube portion 151 has a rounded off front edge in order to facilitate movement past it of the first longitudinal edge 106. The second portion 152 has an air discharge opening 110 facing the second longitudinal edge 107. Air is supplied to the tube 109 via a connection tube 182 and air pump 183.

Shortly downstream of the air supply opening 110 a blade 108 is situated, which is stationary, and serves to cut open the first longitudinal edge 106. Adjacent to the blade 108, on the other side of the air supply tube 109, the engagement by the sealing means that will be discussed below, starts.

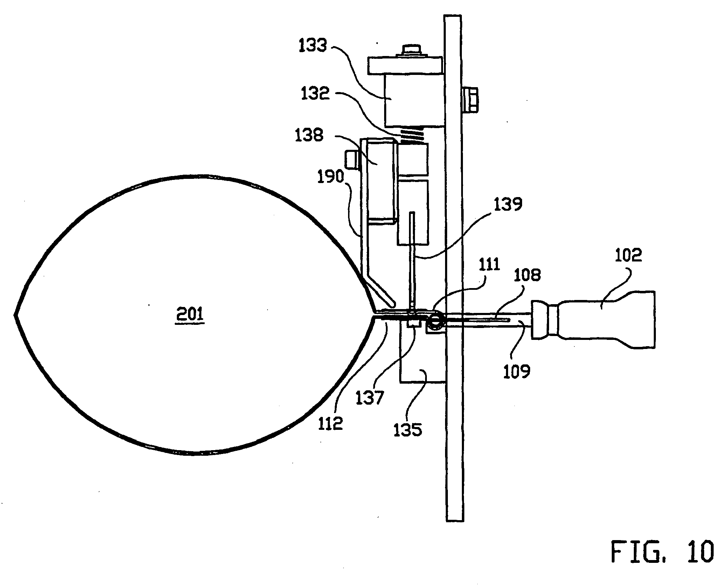

Considered in transverse direction, the sealing station is placed immediately adjacent to the air supply tube 109. Sealing takes place with the help of a sealing wire 139, clearly to be seen in the figures 8A and 8B, as well as figure 10, which is suspended in seal unit 138, which with the help of compression springs 132 is suspended from attachment block 133, that is fixed with the frame 300. At the lower side a contra block 135 is situated, which is also fixed with the frame 300. Between sealing wire 139 and the tubular foil 200 a teflon tape 111 is situated, which runs about runners 130, 130a, the latter being biassed to the outside by means of a compression spring 134 to keep the teflon tape 111 tensioned. As can be seen in figure 10 a protective hood 190 shields the sealing area towards the cushions.

In a similar way a teflon tape 112 runs about runners 131 and 131 a, in which runner 131 a is biassed to the outside again by means of compression spring 134 to keep the teflon tape 112 tensioned. The teflon tape 112 runs on the contra block 135 supported by a strip of soft material, for instance a foam material 137 to level the pressure.

The foil material is thus situated between two teflon tapes 111, 112 which run along with the tubular foil. As a result unwanted melting to machine parts is prevented, and a perfectly closed longitudinal seal 161 is realised in a continuous manner. The longitudinal seal 161 is realised in the area immediately following the blade 108, so that in fact a sealing at the first longitudinal edge 106 is kept intact, in which however the air supply tube 109 extends through it, substantially in longitudinal direction.

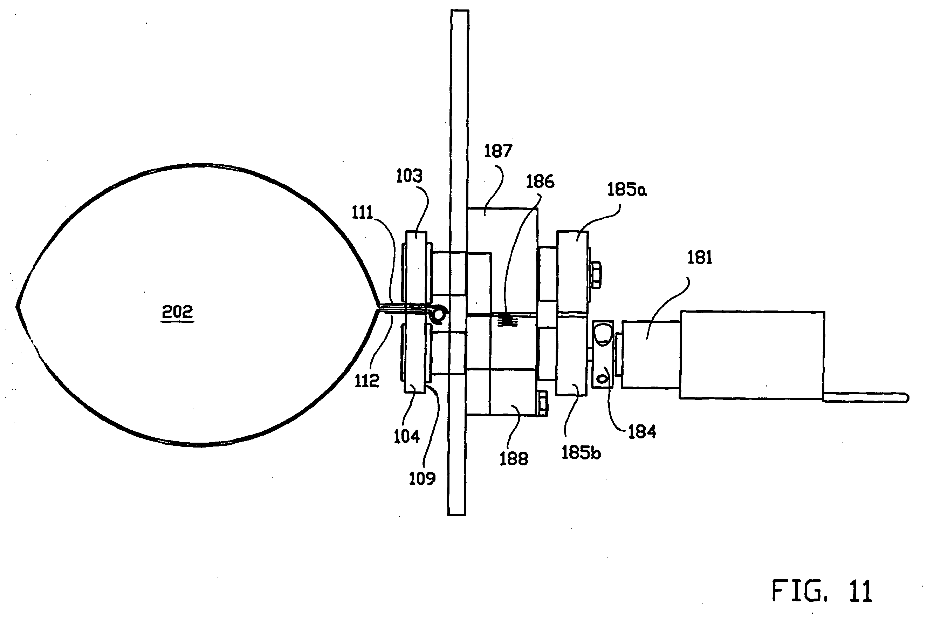

Immediately downstream of the sealing station drive rollers 103 and 104 are positioned underneath and above the tubular foil 200, which drive rollers are driven by motor reduction gear unit 118, via coupling 184, toothed wheel pair 185, and driving blocks 187, 188, in between which a compression spring 186 has been placed. Driving block 188 is fixed with the frame 300 and driving block 187 is clamped against block 188 for letting the wheels 103, 104 exert a clamping force on the foil. The driving blocks 187, 188 drive the drive wheels 103, 104. In turn these wheels drive the tubular foil 200. In figures 9A and 11 it can be seen that the drive wheels 103, 104, considered in width direction, only engage a little part of the tubular foil 200, just next to the air supply tube 109.

During transport of the tubular foil 200 and during discharge of the air/gas from the opening 110 the first longitudinal edge 106 will be pulled taut about the portions 151, 152 of the tube 109. More towards the other longitudinal edge 107 there will be a material surplus, as a result of which pleats 165 (see figure 9A) will arise. As a result it is achieved that not only the filling of the cushions 201, 202, bounded by transverse seal sets 160 is accelerated, but also that a taut and perfectly closed longitudinal seal 161 is realised. As can be seen cushion 201 is still filled, while the longitudinal seal 161 for said cushion is still being made. When the seal 161 is ready, the cushion 201 is filled completely. The cushions 202 are horizontally supported by support plane 180. The ventilating fan 150 cools off the longitudinal seal 161.

## Claims

1. Device for manufacturing cushions filled with a medium from synthetic tubular foil (2, 200), to which device flexible tubular foil (2, 200) is supplied in a supply direction (5), in which the flexible tubular foil is supplied in flat condition, in which the tubular foil has a first (6, 106) and a second (7, 107) longitudinal edge opposite each other, said device being provided with introduction means (9, 109) for introducing a medium, **characterized in that** said device is arranged for processing pre-processed tubular foil and has cutting means (8, 108) for making a cut in the pre-processed tubular foil only and at least near the first longitudinal edge (6, 106) of the foil, the introduction means (9, 109) being elongated and insertable in the pre-processed tubular foil through the cut made by the cutting means (8, 108) for abutment of the introduction means (9, 109) against the part of the first longitudinal edge (6, 106) that is not yet cut, and with sealing means (11, 12, 111, 112) for sealing the preprocessed tubular foil in longitudinal direction and between the introduction means (9, 109) and the second longitudinal edge (7, 107) for sealing off the cut made by the cutting means (8, 108);
wherein the device further comprises means (1, 101, 173, 151, 152) for pulling the first longitudinal edge (6, 106) taut which are adapted for setting the tubular foil at an obtuse angle in the area immediately upstream of the sealing means and which comprise a supply roll or holder shaft (1, 101, 173) for it that is positioned oblique with respect to the transport direction (5) of the tubular foil (2, 200) at the location of the sealing means (11, 12, 111, 112).

2. Device according to claim 1, in which the introduction means (9, 109) is formed by a tube having an opening for instance a slit (10) or holes (110), for introducing the medium into the pre-processed tubular foil, which opening preferably faces away from the first longitudinal edge (6, 106).

3. Device according to claim 2, in which a tube (9, 109) is positioned for extending in upstream direction, past the first longitudinal edge (6, 106) within the tubular foil.

4. Device according to claim 3, in which the tube (9, 109) is part of the means for pulling the first longitudinal edge (6, 106) taut and comprises two portions (151, 152) that are at an obtuse angle to each other.

5. Device according to claim 4, in which the obtuse angle is approximately 175 degrees.

6. Device according to claim 4 or 5, in which the obtuse angle in the tube (9, 109) is buckle-shaped.

7. Device according to claim 1, 4 or 5, in which the tube (9, 109) in a downstream portion of the obtuse angle is provided with the discharge opening(s) (10, 110).

8. Device according to claim 3 or 7, in Which the cutting means (8, 108) is positioned immediately downstream of the discharge opening(s) (10, 110).

9. Device according to any one of the preceding claims, in which the cutting means (8, 108) is positioned at the location of the upstream end of the sealing means (11, 12 111, 112).

10. Device according to any one of the claims 1-8, in which the cutting means (8, 108) is positioned at a distance downstream of the upstream end of the sealing means (11, 12, 111, 112).

11. Device according to any one of the preceding claims, in which the pre-processed tubular foil (2, 200) is provided with spaced apart transverse seals (53a, 53b, 63a, 63b, 73a, 73b), each transverse seal extending from the second longitudinal edge (7, 107) up to a distance from the first longitudinal edge (6, 106).

12. Device according to any one of the preceding claims, in which the pre-processed tubular foil (2, 200) is provided with repetitive series of a number of consecutive and spaced apart transverse seals (53a, 53b, 63a, 63b, 73a, 73b), in which each transverse seal extends from the second longitudinal edge (7, 107) up to a distance from the first longitudinal edge (6, 106), in which at a distance from a last transverse seal of the series a triplet is situated of consecutively and spaced apart from each other a transverse seal (68, 73a), a row of perforations (64a, 74a), which row extends from the first to the second longitudinal edge, and a transverse seal (69, 73b), the distance between a transverse seal and the row of perforations of the triplet being smaller than the distance between the neighbouring transverse seals of the number of transverse seals.

13. Device according any one of the preceding claims 1, 2, 3 or 11, in which furthermore perforation means are provided for arranging a row of perforations (64a, 74a), which row extends transverse to the supply direction (5).

## Patentansprüche

1. Vorrichtung zur Herstellung von Kissen, die mit einem Medium aus synthetischer Schlauchfolie (2, 200) gefüllt sind, wobei die flexible Schlauchfolie (2, 200) der Vorrichtung in einer Zuführungsrichtung (5) zugeführt wird, wobei die flexible Schlauchfolie in einem flachen Zustand zugeführt wird und wobei die Schlauchfolie eine erste (6, 106) und eine zweite (7, 107) Längskante aufweist, die einander gegenüberliegen, wobei die Vorrichtung mit Einführungsmitteln (9, 109) zum Einführen eines Mediums ausgerüstet ist, **dadurch gekennzeichnet, dass** die Vorrichtung eingerichtet ist, die vorverarbeitete Schlauchfolie zu verarbeiten, und dass sie Schneidemittel (8, 108) zum Ausführen eines Schnittes in der vorverarbeiteten Schlauchfolie nur und mindestens in der Nähe der ersten Längskante (6, 106) der Folie aufweist, wobei die Einführungsmittel (9, 109) langgestreckt sind und in die vorverarbeitete Schlauchfolie durch den Schnitt, der von den Schneidemitteln (8, 108) hergestellt wurde, einsetzbar sind, so dass die Einführungsmittel (9, 109) gegen den Teil der ersten Längskante (6, 106) stoßen, welcher noch nicht geschnitten wurde, und Dichtungsmittel (11, 12, 111, 112) aufweist zum Abdichten der vorverarbeiteten Schlauchfolie in Längsrichtung sowie zwischen den Einführungsmitteln (9, 109) und der zweiten Längskante (7, 107), um den Schnitt abzudichten, der von den Schneidemitteln (8, 108) ausgeführt wurde; wobei die Vorrichtung des Weiteren Mittel (1, 101, 173, 151, 152) aufweist zum Straffziehen der ersten Längskante (6, 106), die eingerichtet sind, die Schlauchfolie unter einem stumpfen Winkel in den Bereich ummittelbar stromauf von den Dichtungsmitteln einzusetzen, und die eine Zuführungswalze oder Stützwelle (1, 101, 173) für sie aufweisen, die schräg mit Bezug auf die Transportrichtung (5) der Schlauchfolie (2, 200) am Ort der Dichtungsmittel (11, 12, 111, 112) angeordnet ist.

2. Vorrichtung nach Anspruch 1, wobei die Einführungsmittel (9, 109) durch ein Rohr gebildet werden, das eine Öffnung, zum Beispiel einen Schlitz (10) oder Löcher (110) zum Einführen des Mediums in die vorverarbeitete Schlauchfolie aufweist, wobei die Öffnung vorzugsweise von der ersten Längskante (6, 106) abgewandt ist.

3. Vorrichtung nach Anspruch 2, wobei ein Rohr (9, 109) angeordnet ist, das sich in Stromauf-Richtung über die erste Längskante (6, 106) in der Schlauchfolie hinaus erstreckt.

4. Vorrichtung nach Anspruch 3, wobei das Rohr (9, 109) ein Teil der Mittel zum Straffziehen der ersten Längskante (6, 106) ist und zwei Abschnitte (151, 152) aufweist, die in einem stumpfen Winkel zueinander stehen.

5. Vorrichtung nach Anspruch 4, wobei der stumpfe Winkel ungefähr 175 Grad beträgt.

6. Vorrichtung nach Anspruch 4 oder 5, wobei der stumpfe Winkel in dem Rohr (9, 109) knickförmig ist.

7. Vorrichtung nach Anspruch 1, 4 oder 5, wobei das Rohr (9, 109) in einem Stromab-Abschnitt des stumpfen Winkels mit der (den) Ausflussöffnung(en) (10, 110) versehen ist.

8. Vorrichtung nach Anspruch 3 oder 7, wobei die Schneidemittel (8, 108) unmittelbar stromab von der (den) Ausflussöffnung(en) (10, 110) aus angeordnet sind.

9. Vorrichtung nach einem der vorhergehenden Ansprüche, wobei die Schneidemittel (8, 108) an dem Ort des Stromauf-Endes der Dichtungsmittel (11, 12, 111, 112) angeordnet sind.

10. Vorrichtung nach einem der Ansprüche 1 bis 8, wobei die Schneidemittel (8, 108) bei einem Abstand stromab vom Stromauf-Ende der Dichtungsmittel (11, 12, 111, 112) aus angeordnet sind.

11. Vorrichtung nach einem der vorhergehenden Ansprüche, wobei die vorverarbeitete Schlauchfolie (2, 200) mit Querabdichtungen (53a, 53b, 63a, 63b, 73a, 73b) versehen ist, die in einem Abstand voneinander angeordnet sind, wobei sich jede Querabdichtung von der zweiten Längskante (7, 107) bis zu einem Abstand von der ersten Längskante (6, 106) erstreckt.

12. Vorrichtung nach einem der vorhergehenden Ansprüche, wobei die vorverarbeitete Schlauchfolie (2, 200) ausgestattet ist mit sich wiederholenden Reihen aus einer Anzahl aufeinander folgender und voneinander in einem Abstand angeordneter Querabdichtungen (53a, 53b, 63a, 63b, 73a, 73b), wobei sich jede Querabdichtung von der zweiten Längskante (7, 107) bis zu einem Abstand von der ersten Längskante (6, 106) erstreckt, wobei in einem Abstand von einer letzten Querabdichtung der Reihe eine Dreiergruppe angeordnet ist, welche aus einer Querabdichtung (68, 73a), einer Perforationszeile (64a, 74a), die sich von der ersten zur zweiten Längskante erstreckt, und einer Querabdichtung (69, 73b) besteht, die aufeinander folgen und in einem Abstand voneinander angeordnet sind, wobei der Abstand zwischen einer Querabdichtung und der Perforationszeile der Dreiergruppe kleiner ist als der Abstand zwischen den benachbarten Querabdichtungen der Anzahl von Querabdichtungen.

13. Vorrichtung nach einem der vorhergehenden Ansprüche 1, 2, 3 oder 11, wobei außerdem Perforationsmittel für das Einrichten einer Perforationszeile (64a, 74a) vorgesehen sind, wobei sich die Zeile quer zur Zuführungsrichtung (5) erstreckt.

## Revendications

1. Dispositif de fabrication de coussins remplis d'un milieu à partir d'une feuille tubulaire synthétique (2, 200), auquel dispositif une feuille tubulaire souple (2, 200) est alimentée dans un sens d'alimentation (5), dans lequel la feuille tubulaire souple est alimentée en un état plat, dans lequel la feuille tubulaire comporte un premier (6, 106) et un deuxième (7, 107) bord longitudinal opposés l'un à l'autre, ledit dispositif étant prévu avec un moyen d'introduction (9, 109) pour introduire un milieu, **caractérisé en ce que** ledit dispositif est agencé pour traiter une feuille tubulaire prétraitée et comporte un moyen de coupe (8, 108) pour réaliser une coupe dans la feuille tubulaire prétraitée seulement et au moins à proximité du premier bord longitudinal (6, 106) de la feuille, le moyen d'introduction (9, 109) étant allongé et insérable dans la feuille tubulaire prétraitée à travers la coupe réalisée par le moyen de coupe (8, 108) en vue d'une butée du moyen d'introduction (9, 109) contre la partie du premier bord longitudinal (6, 106) qui n'est pas encore coupée, et d'un moyen de scellement (11, 12, 111, 112) pour sceller la feuille tubulaire prétraitée dans le sens longitudinal et entre le moyen d'introduction (9, 109) et le deuxième bord longitudinal (7, 107) afin de sceller la coupe réalisée par le moyen de coupe (8, 108) ;
dans lequel le dispositif comprend en outre un moyen (1, 101, 173, 151, 152) pour tirer et raidir le premier bord longitudinal (6, 106) qui est adapté pour disposer la feuille tubulaire selon un angle obtus dans la zone immédiatement en amont du moyen de scellement et qui comprend un cylindre d'alimentation ou un arbre de maintien (1, 101, 173) pour celui-ci qui est positionné en oblique par rapport au sens de transport (5) de la feuille tubulaire (2, 200) à l'emplacement du moyen de scellement (11, 12, 111, 112).

2. Dispositif selon la revendication 1, dans lequel le moyen d'introduction (9, 109) est formé par un tube ayant une ouverture, par exemple une fente (10) ou des trous (110), pour introduire le milieu dans la feuille tubulaire prétraitée, laquelle ouverture fait préférablement face à l'opposé du premier bord longitudinal (6, 106).

3. Dispositif selon la revendication 2, dans lequel un tube (9, 109) est positionné de façon à s'étendre dans une direction amont, au-delà du premier bord longitudinal (6, 106) à l'intérieur de la feuille tubulaire.

4. Dispositif selon la revendication 3, dans lequel le tube (9, 109) fait partie du moyen pour tirer et raidir le premier bord longitudinal (6, 106) et comprend deux parties (151, 152) qui décrivent un angle obtus l'une par rapport à l'autre.

5. Dispositif selon la revendication 4, dans lequel l'angle obtus est approximativement de 175 degrés.

6. Dispositif selon la revendication 4 ou 5, dans lequel l'angle obtus dans le tube (9, 109) a une forme de boucle.

7. Dispositif selon la revendication 1, 4 ou 5, dans lequel le tube (9, 109) dans une partie aval de l'angle obtus est prévu avec la (les) ouverture(s) d'évacuation (10, 110).

8. Dispositif selon la revendication 3 ou 7, dans lequel le moyen de coupe (8, 108) est positionné immédiatement en aval de la (des) ouverture(s) d'évacuation (10, 110).

9. Dispositif selon l'une quelconque des revendications précédentes, dans lequel le moyen de coupe (8, 108) est positionné à l'emplacement de l'extrémité amont du moyen de scellement (11, 12, 111, 112).

10. Dispositif selon l'une quelconque des revendications 1 à 8, dans lequel le moyen de coupe (8, 108) est positionné à une certaine distance en aval de l'extrémité amont du moyen de scellement (11, 12, 111, 112).

11. Dispositif selon l'une quelconque des revendications précédentes, dans lequel la feuille tubulaire prétraitée (2, 200) est prévue avec des points de scellement transversaux espacés (53a, 53b, 63a, 63b, 73a, 73b), chaque point de scellement transversal s'étendant du deuxième bord longitudinal (7, 107) jusqu'à une certaine distance du premier bord longitudinal (6, 106).

12. Dispositif selon l'une quelconque des revendications précédentes, dans lequel la feuille tubulaire prétraitée (2, 200) est prévue avec une série répétitive d'un certain nombre de points de scellement transversaux consécutifs et espacés (53a, 53b, 63a, 63b, 73a, 73b), dans lequel chaque point de scellement transversal s'étend du deuxième bord longitudinal (7, 107) jusqu'à une certaine distance du premier bord longitudinal (6, 106), dans lequel, à une certaine distance d'un dernier point de scellement transversal de la série, se trouve un triplet, de façon consécutive et espacée les uns des autres, d'un point de scellement transversal (68, 73a), d'une rangée de perforations (64a, 74a), laquelle rangée s'étend du premier jusqu'au deuxième bord longitudinal, et d'un point de scellement transversal (69, 73b), la distance entre un point de scellement transversal et la rangée de perforations du triplet étant plus petite que la distance entre les points de scellement transversaux voisins du certain nombre de points de scellement transversaux.

13. Dispositif selon l'une quelconque des revendications précédentes 1, 2, 3 ou 11, dans lequel, en outre, des moyens de perforation sont prévus pour agencer une rangée de perforations (64a, 74a), laquelle rangée s'étend transversalement au sens d'alimentation (5).
